# EUROPÄISCHE PATENTANMELDUNG

(11) **EP 2 644 955 A2**
(43) Veröffentlichungstag der Anmeldung: **02.10.2013**
(21) Anmeldenummer: 13161310.1
(22) Anmeldetag: 27.03.2013
(51) Int. Cl.: F16K 17/10, G21C 1/09, G21C 9/004

(54) **Druckhaltersystem, insbesondere für ein Kernkraftwerk**

(30) Priorität: 27.03.2012 DE 102012006041
(71) Anmelder: AREVA GmbH, 91052 Erlangen (DE)
(72) Erfinder: Conrads, Hermann-Josef, 91074 Herzogenaurach (DE); Dr. Schlicht, Gerhard, 90491 Nürnberg (DE); Maurer, Tassilo, 91058 Erlangen (DE)
(74) Vertreter: Kugler, Jörg

(57) **Zusammenfassung**

Ein Druckhaltersystem, insbesondere für ein Kernkraftwerk, mit einem Druckhalter (9) und mit einem zwei Anschlüsse (13, 21) aufweisenden Steuerventil (10), wobei die beiden Anschlüsse (13, 21) strömungsmäßig mit dem Druckhalter (9) verbunden sind, soll einerseits ein Steuerventil (10) aufweisen, welches sowohl bei Erreichen eines kritischen Drucks ein zugeordnetes Sicherheitsventil zuverlässig öffnet als auch bei Unterschreiten eines kritischen Drucks dieses wieder zuverlässig verschließt, und soll andererseits hierbei unerwünschte Druckwellen unterdrücken und/oder durch geeignete Maßnahmen deren Energie absorbieren. Dazu ist erfindungsgemäß vorgesehen, dass zwischen dem Druckhalter (9) und dem Steuerventil (10) eine Druckwellentkopplungseinheit (1) mit einem innerhalb einer druckdichten und volumenkonstanten Umschließung befindlichen Innenraum angeordnet ist, wobei die Umschließung zusätzlich zu einer Einlassöffnung (14), die über eine Versorgungsleitung (16) mit dem Druckhalter (9) verbunden ist, zwei Auslassöffnungen (18, 22) aufweist, die jeweils über eine Verbindungsleitung (20, 24) mit einem zugehörigen Anschluss (13, 21) des Steuerventils (10) verbunden sind, und wobei die Druckwellentkopplungseinheit (1) gegenüber den Verbindungsleitungen (20, 24) einen signifikant erhöhten Innendurchmesser (32) aufweist.

## Beschreibung

Die Erfindung bezieht sich auf ein Druckhaltersystem, insbesondere für ein Kernkraftwerk, mit einem Druckhalter und mit einem zwei Anschlüsse aufweisenden Steuerventil, wobei die beiden Anschlüsse strömungsmäßig mit dem Druckhalter verbunden sind.

Mit Druck beaufschlagte Gefäße oder Behälter sind regelmäßig gegen unzulässige Überdrücke abzusichern. Dies geschieht oftmals mit Hilfe von Sicherheitsventilen bzw. mit durch Steuerventile gesteuerten Sicherheitsventilen, welche an dem Behälter angebracht sind bzw. strömungsmäßig mit diesem über Leitungen verbunden sind. Durch eine rechtzeitige und ausreichende Druckentlastung werden insbesondere kritische und damit sicherheitsrelevante Druckzustände in einem solchen System vermieden und unterbunden. Insbesondere in einem als Druckwasserreaktor ausgelegten Kernkraftwerk ist die ständige Überwachung des Drucks im Primärkreislauf, der auch den Reaktorkern umfasst, von hoher sicherheitstechnischer Bedeutung. Ebenfalls ist die Sicherstellung eines konstanten Drucks im Primärkreislauf wünschenswert, um Schwankungen zu vermeiden.

Hierzu sind Druckwasserreaktoren mit einem Druckhaltersystem ausgestattet, welches unter anderem aus einem Druckhalter besteht, der auch als Druckbehälter bezeichnet wird, und aus einem oder mehreren Bauteilen, die Überdruck zuverlässig und sicher ableiten. Der Druckhalter dient dazu, den gewünschten Druck im Reaktorkühlkreislauf sicherzustellen und temperaturbedingte Schwankungen im Volumen auszugleichen, wofür der Druckhalter etwa als Behälter ausgeformt ist, in dem während des Betriebs ein Siedezustand herrscht und sich ein Dampfpolster ausbildet.

Auf Grund seiner sicherheitstechnischen Bedeutung muss der Druck des Druckhalters im Betriebszustand laufend überwacht werden und muss gegen einen unzulässigen Überdruck abgesichert werden. Dies geschieht in gebräuchlichen Kernkraftwerken mit Hilfe von Sicherheitseinrichtungen mit Sicherheitsventilen und zugeordneten Steuerventilen, welche am Druckhalter angebracht sind bzw. strömungsmäßig mit dem Druckhalter über Leitungen verbunden sind.

Zur Vermeidung von Überdrücken sind ein oder mehrere Steuerventile angebracht, die bei Normaldruck geschlossen sind und bei Überschreiten eines kritischen Drucks im Druckhalter öffnen. Dadurch wird ein mit dem jeweiligen Steuerventil zusammenwirkendes Sicherheitsventil geöffnet, so dass ein weiterer, oftmals systemkritischer Druckanstieg vermieden werden kann und der vorherrschende Druck auf ein gewünschtes Maß reduziert wird. Nach Druckabbau auf ein unkritisches Maß soll das Steuerventil wieder ansprechen und das zugeordnete Sicherheitsventil automatisch verschließen, damit das Leck, welches durch Öffnen des Sicherheitsventils entsteht, wieder verschlossen wird und somit einerseits Austritt von radioaktivem Material aus dem Primärkreislauf unterbunden wird und andererseits der gewünschte Druck im Primärkreislauf gehalten wird.

Eine solche, gebräuchliche Sicherheitseinrichtung, die den Zuverlässigkeitsstandards im Bereich der Kernkraftanlagen entspricht, ist beispielsweise aus der Offenbarungsschrift DE 10 2007 013 359 A1 oder aus dem Patent DE 196 28 610 C1 bekannt.

Zur eigenmediumbetätigten Steuerung des Sicherheitsventils in Abhängigkeit vom Druck im Druckhalter ist eine Steuereinrichtung bzw. ein Steuerventil vorgesehen, bei der / dem die erforderliche Betätigungs- und Haltekraft, die für den Betätigungsvorgang und Haltevorgang notwendig ist, von dem Systemdruck selbst bewirkt wird. Die Steuereinrichtung besteht üblicherweise im Wesentlichen aus drei Baugruppen, um ein sicheres und zuverlässiges Öffnen und Wiederverschließen des zugeordneten Sicherheitsventils zu gewährleisten.

Die erste Baugruppe ist im Wesentlichen ein Druck-Weg-Umformer, in dem ein sich verändernder, also ein sinkender oder steigender, Druck im Druckhalter in einen Hubweg umgesetzt wird. Dazu steht diese Baugruppe über eine Druckleitung mit dem Druckhalter in Verbindung. Die zweite Baugruppe der Steuereinrichtung wird Vorsteuerventil genannt und besteht im Wesentlichen aus einem Auffüllkegel und einem in diesen integrierten Entlastungskegel. Von dem Druckhalter aus führt ebenfalls eine Zuleitung in den Bereich des Auffüllkegels. Die dritte Baugruppe, das Steuerteil, besteht im Wesentlichen aus einem Rückschlagkegel. Die dritte Baugruppe ermöglicht die Druckentlastung des Steuerraums des Sicherheitsventils.

Grundsätzlich ist das Steuerventil druckhalterseitig über zwei Leitungen mit dem Druckhalter verbunden und mit dem im Druckhalter befindlichen Druck beaufschlagt. Aus dem Wechselspiel der einzelnen Baugruppen, wie dem Druck-Weg-Umformer und dem Vorsteuerventil, öffnet das zugeordnete Sicherheitsventil ab einem bestimmten Druck, der zum Beispiel 175 bar betragen kann, und schließt bei Sinken unter einen Druckwert von beispielsweise 150 bar. Durch das Zusammenwirken der Bauteile soll ein sicherer Öffnungs- und Schließmechanismus für das Steuerventil gewährleistet werden, wobei nachteilhaft ist, dass durch die mechanische Bewegung von Komponenten in den einzelnen Baugruppen eine Flüssigkeits- und/oder Gasfluktuation bewirkt wird. Neben einer hierdurch auftretenden Veränderung des Drucks im System wird auch eine Druckwelle erzeugt, die sich auch auf die anderen Baugruppen auswirkt. Insbesondere sind Druck-Weg-Umformer und Vorsteuerventil durch eine gemeinsame Leitung, die Druckentnahmeleitung, zum Druckhalter hin miteinander verbunden, so dass sich insbesondere plötzliche Volumenveränderungen im Vorsteuerventil in einem Druckstoß äußern, der sich über die Druckentnahmeleitung in den Druck-Weg-Umformer hin fortpflanzt und dort Bewegungen und/oder unerwünschte Effekte und/oder sogar Schäden verursacht, die unabhängig vom Gesamtdruck des Systems sind.

In Flüssigkeiten läuft die Druckwelle hierbei als Wellenfront durch das inkompressible Medium. In kompressiblen Medien, wie den meisten Gasen, breitet sich diese Störung, die beispielsweise durch hindurchbewegte Festkörper verursacht wird, als Druckwelle aus und bewegt sich mit der Schallgeschwindigkeit des Mediums. Bei einer langsameren Ausbreitung bzw. einer Verzögerung in der Ausbreitung ist eine Neuverteilung des Mediums möglich, so dass die Störung ausgeglichen werden kann. Im Umkehrschluss bedeutet dies, dass die Materie des Mediums nicht schnell genug reagieren und ausweichen kann, sofern die Druckwelle sich schneller bewegt; insbesondere in der Nähe der Störquelle ist ein solches Verhalten häufig zu beobachten. Die Zustandsgrößen, wie Dichte, Druck, Temperatur Geschwindigkeit etc. erfahren eine quasi instantane Änderung, wodurch oftmals lokalisierte Störungswellen - Stoßwellen - mit stark ansteigendem Druck erzeugt werden, die eine schockartige Erhitzung des Materials auslösen können und zu normalen Druckwellen abklingen, sobald ihre Energie ausreichend absorbiert wurde.

Auf Grund ihrer Wirkung sind daher starke Druckwellen, die in der Strömungslehre auch als Stoß- oder Schockwellen bezeichnet werden und extreme Druckunterschiede hervorrufen, zu vermeiden.

Der Erfindung liegt daher die Aufgabe zugrunde, ein Druckhaltersystem der oben genannten Art anzugeben, dessen Steuerventil sowohl bei Erreichen eines kritischen Drucks das Sicherheitsventil zuverlässig öffnet als auch bei Unterschreiten eines kritischen Drucks dieses wieder zuverlässig verschließt sowie hierbei unerwünschte Druckwellen unterdrückt und/oder durch geeignete Maßnahmen deren Energie absorbiert und unschädlich macht.

Diese Aufgabe wird erfindungsgemäß gelöst, indem zwischen dem Druckhalter und dem Steuerventil eine Druckwellentkopplungseinheit mit einem innerhalb einer druckdichten und vorzugsweise volumenkonstanten Umschließung befindlichen Innenraum angeordnet ist, wobei die Umschließung zusätzlich zu einer Einlassöffnung, die über eine Versorgungsleitung mit dem Druckhalter verbunden ist, zwei Auslassöffnungen aufweist, die jeweils über eine Verbindungsleitung mit einem zugehörigen Anschluss des Steuerventils verbunden sind, und wobei die Druckwellentkopplungseinheit gegenüber den Verbindungsleitungen einen signifikant erhöhten Innendurchmesser aufweist.

Vorteilhafte Ausgestaltungen sind Gegenstand der Unteransprüche.

Die Erfindung geht von der Überlegung aus, dass Bewegungen der mechanisch beweglichen Teile in einem Steuerventil eine lokale Änderung des Drucks sowie eine Strömung von Fluiden auslösen. Durch die von zwei Anschlüssen des Steuerventils, die beispielsweise dem Druck-Weg-Umformer und dem Vorsteuerventil zugeordnet werden können, gemeinsam genutzte Leitung, die eine Verbindung zwischen beiden Baugruppen darstellt, können somit Druckwellen von der einen Baugruppe in die andere Baugruppe übertragen werden. Auf Grund des üblicherweise geringen Innendurchmessers dieser Leitung findet nur ein geringer Ausgleich dieser Druckwellen durch den Druckhalter statt, so dass sich ein Großteil dieser Druckwelle oder auch eines plötzlichen lokalen Druckabfalls in die jeweils andere Baugruppe überträgt. Durch diese plötzlich auftretenden Druckschwankungen können unkontrollierte, fehlerbehaftete und grundsätzlich unerwünschte Bewegungen des Steuerventils und damit auch des Sicherheitsventils ausgelöst werden, die nicht mit dem Druck im Druckhalter bzw. dem Primärkreislauf korreliert sind. Durch die Wirkung der Druckwellen, die über die Druckentnahmeleitung übertragen werden, ist auch ein gegenseitiges, resonanzartiges Aufschaukeln der Bewegungen in dem Steuerventil möglich, das es unbedingt zu vermeiden gilt.

Durch eine geeignete Dämpfung der Druckwellen und eine diesbezügliche Entkopplung der miteinander verbundenen relevanten Strömungsräume können solche unerwünschten Bewegungen vermieden werden, so dass zudem ein erhöhter Verschleiß der einzelnen Baugruppen unterbunden wird. Gerade in Kernkraftwerken ist ein Austausch einzelner Komponenten oder ganzer Bauteile einerseits mit einem hohen Aufwand verbunden, der im Primärkreislauf auch nur bei abgeschaltetem Reaktor vorgenommen werden kann, und andererseits auch mit erheblichen Kosten verbunden. Somit ist gerade eine Vermeidung von Verschleiß wünschenswert. Durch die Druckwellenentkopplungseinheit - im Folgenden auch als DWEKE bezeichnet - kann der Druckhalter möglichst einfach konzipiert sein. So sind zusätzliche Öffnungen oder Druckentnahmestutzen an einem Druckhalter zu vermeiden, um einerseits Fehlerquellen auszuschließen und andererseits eine möglichst lange Lebensdauer des Druckhalters zu gewährleisten. Ein Versagen oder auch ein Materialfehler bei einer jeden Komponente bedeutet oftmals einen Komplettaustausch des Druckhalters, den es zu vermeiden gilt. Auch stellt gerade ein Anflanschen von Leitungen, z.B. durch Verschweißen, an den Druckhalter eine schwierige Aufgabe dar, so dass zusätzliche Leitungen, welche direkt am Druckhalter angeschlossen sind, zu vermeiden sind. Gerade durch diese technischen Randbedingungen erzeugt die nunmehr vorgesehene, als Rohrverzweigung ausgestaltete Druckwellenentkopplungseinheit ihre vorteilhafte Wirkung, da nur ein einziger Anschluss an den Druckhalter notwendig ist, und z.B. im Falle eines Materialdefekts nur einzelne Bauteile ausgetauscht werden müssen. Auch im Hinblick auf bestehende Kernkraftwerke bietet es sich an, eine separate Druckwellenentkopplungseinheit zu verwenden, da somit ein einfaches Nachrüsten ermöglicht wird.

Gerade durch das - vorzugsweise sprunghafte, stufenartige und quantitativ signifikante - Aufweiten des Innendurchmessers der strömungsführenden Leitungen in dem Innenraum der Druckwellentkopplungseinheit verlieren die Druckwellen weitgehend ihre Wirkung, da der lokale Überdruck plötzlich auf ein vergleichsweise großes Volumen verteilt wird und somit die Druckwellen abgeschwächt werden.

Insbesondere ist hierbei auch die geometrische Optimierung der Druckwellenentkopplungseinheit und Ihrer Zuleitungen relativ einfach realisierbar. Auf Grund des separaten Bauteils können zum einen die Längen der Verbindungsleitungen derart gewählt werden, dass die Druckwellen in möglichst geringem Maße weitergegeben werden. Zum anderen können die Auslassöffnungen der Druckwellenentkopplungseinheit im Hinblick auf dieses Auslegungsziel zueinander angeordnet werden, ohne dass bestehende Bauformen des Druckhalters zu wesentlichen Einschränkungen führen.

Vorteilhafterweise ist die Entfernung zwischen der Einlassöffnung und einer der beiden Auslassöffnungen in der Druckwellenentkopplungseinheit einerseits möglichst groß, und andererseits liegen diese an gegenüberliegenden Enden. Hierdurch wird eine Weitergabe der Druckwellen an den Druckhalter in geeigneter Weise unterdrückt, da die Entfernung der einzelnen Öffnungen zueinander möglichst groß ist. Durch die Anordnung an gegenüberliegenden Enden wird eine dennoch entgegen der normalbetrieblichen Strömungsrichtung von der einen Auslassöffnung her sich ausbreitende Druckwelle zunächst an den Druckhalter und somit an ein Bauteil mit großem Volumen, in dem sich die Druckwelle endgültig zerlaufen kann, weitergegeben und nicht über die andere Auslassöffnung an die andere Baugruppe im Steuerventil.

Wünschenswerterweise ist der Aufbau der DWEKE von ihrer Geometrie möglichst einfach, so dass die DWEKE in vorteilhafter Ausgestaltung eine zylindrische Grund- bzw. Basisform im Innenraum besitzt, welche vom Bau her einfach umzusetzen ist und gleichzeitig eine hohe Stabilität verspricht. Vorteilhafterweise ist hierbei die Höhe des Basiszylinders größer als der Innendurchmesser selbst, so dass die Druckwellen, die sich bevorzugt entlang eines Linearwegs fortpflanzen einen möglichst großen Teil Ihres Wegs in der DWEKE zurücklegen und erst nach Durchlaufen der DWEKE in andere Leitungen eintreten, wobei sie in diesem Fall bereits einen Großteil ihrer Stoßwirkung verloren haben sollten.

Die Ein- und Auslassöffnungen in der Umschließungswand der DWEKE sind wünschenswerterweise derart voneinander entkoppelt, dass die vom Steuerventil und von den Anschlussleitungen her sich ausbreitenden Druckwellen nicht durch die DWEKE hindurch in die anderen Leitungen weitergegeben werden, so dass das angeschlossene Steuerventil nicht in unerwünschter Weise beeinflusst wird. Hierzu sind die einzelnen Öffnungen vorteilhafterweise derart zueinander angeordnet, dass die Einlassöffnung und eine der beiden Auslassöffnungen einander gegenüberliegend an den Stirnseiten des Zylinders angeordnet sind, und dass die andere Auslassöffnung am Ende eines radial von der Mantelfläche des Zylinders abstehenden, vorzugsweise zylindrischen Stutzens angeordnet ist. Gerade durch eine solche Geometrie findet keine Weitergabe der Druckwellen in die Verbindungsleitung statt, die an den Stutzen angeschlossen ist, statt. Denn die Druckwelle passiert zunächst hauptsächlich auf Grund ihrer linearen, bevorzugt in Richtung der Hauptachse des Basiszylinders sich einstellenden Ausbreitungsrichtung den Stutzen, ohne ihn diesen hineinzuwirken. Erst Reflektionen unter anderem an den Stirnseiten des Basiszylinders sorgen für eine Verteilung der Druckwelle, die in diesem Stadium aber bereits einen Großteil ihrer Kraft verloren hat. Zudem führt eine Querschnittsänderung zu einer weiteren Dämpfung des Druckstoßes.

Vorteilhafterweise ist der Innendurchmesser des Stutzens im Wesentlichen so groß wie der Innendurchmesser des Basiszylinders, so dass die Druckwellen, die in den Stutzen gelangen, bevorzugt eine Reflektion an den Wänden erfahren und nicht über die am äußeren Ende des Stutzens angeordnete Auslassöffnung in die zugehörige Verbindungsleitung gelangen.

Hierzu ist ebenfalls in vorteilhafter Ausgestaltung der radiale Überstand des Stutzens gegenüber der Mantelfläche des Basiszylinders größer als der Innendurchmesser des Stutzens.

Wünschenswerterweise sind die Druckwellen, die von der stirnseitigen Auslassöffnung des Basiszylinders kommen, vor Eintritt in den Stutzen bereits zerlaufen. Hierzu ist in vorteilhafter Ausgestaltung der axiale Abstand des Stutzens von der mit der Auslassöffnung versehenen Stirnseite des Basiszylinders größer als der Durchmesser des Basiszylinders, so dass einerseits ein gewisser Abstand geschaffen ist und andererseits die Druckwelle aber bevorzugt in Richtung der einlassöffnungsseitigen Stirnseite wirkt.

Um bereits vor Erreichen der anderen Auslassöffnung eine möglichst hohe Anzahl an Reflektionen der Druckwellen zu erreichen, ist vorteilhafterweise eine Blende zwischen den beiden Auslassöffnungen im Innenraum der DWEKE angeordnet. Durch eine Blende wird der Innenraum der DWEKE in zwei Zonen unterteilt, so dass eine Druckwelle sich bevorzugt in dem jeweiligen Eintrittsvolumen der DWEKE ausbreitet, vornehmlich dort energieabsorbierende Reflektionen erfährt und bevorzugt in diesem Teil zerfließt. Hierdurch wird erreicht, dass die Druckwelle dosiert und abgeschwächt in das andere Volumen bzw. in die andere Zone weitergleitet wird.

Auf Grund der vorteilhaften geometrischen zylinderförmigen Ausformung der DWEKE bietet es sich an, die Blende ebenfalls mit einer kreisförmigen Öffnung zu versehen und diese als Ringblende zu gestalten. Hierbei ist es vorteilhaft, wenn der Innendurchmesser der Blendenöffnung wesentlich kleiner als der Durchmesser des Basiszylinders ist, da so eine geeignete Dosierung der Druckwelle erreicht wird und ein Großteil der Energie bereits absorbiert wird bevor die Druckwelle durch die Ringblende gelangt.

Wünschenswert ist es ebenfalls eine Möglichkeit zu besitzen, Dampfzustände des Mediums in der DWEKE zu erzeugen. Hierzu ist in vorteilhafter Ausgestaltung eine Entgasungseinheit vorgesehen. In einem dynamischen Gleichgewicht, bei dem genauso viele Teilchen von der flüssigen Phase in die Gasphase eintreten wie umgekehrt, spricht man von einem gesättigten Dampf. Ebenfalls denkbar ist überhitzter Dampf, der sich in seinem Verhalten einem gasartigen Zustand nähert. Umgekehrt kann Dampf bei Kühlung auch zu einer Flüssigkeit kondensieren. Zur Vermeidung von Druckwellen kann es nun vorteilhaft sein, einen dampfförmigen Zustand zu haben, der nicht einer solch hohen Inkompressibilität wie Flüssigkeiten unterliegt, so dass durch eine Entgasungseinheit in der DWEKE dieser Zustand erreicht werden kann

Mit einer Entgasungseinheit wird ein kontinuierlicher, kleiner Dampfstrom dem System entnommen. Der Dampf wird in einer Drossel beispielsweise auf ca. 1 bar entspannt und einem geeigneten Behälter, wie einem Abblasebehälter oder einem Drainagebehälter, zugeführt. Durch die kontinuierliche Entnahme eines Dampfstromes kann eine gleichmäßige Temperatur bei Sattdampfbedingungen an dieser Komponente erreicht werden und eine Ansammlung von Kondensat und von nicht kondensierbaren Gasen, wie Wasserstoff, in diesem Teilstück vermieden werden. Durch die sich einstellende Dampfatmosphäre kann somit die Dämpfung auftretender Druckwellen deutlich verbessert werden.

Sammeln sich nicht kondensierbare Gase, wie Wasserstoff, in einer Rohrleitung oder in Komponenten des Primärkreises an, so kann dies zu einer lokalen Abkühlung der Rohrleitung oder der Komponenten führen. Bei Druckschwankungen und damit einhergehendem Wandern der Temperaturfront kann es zu thermischen Wechselbelastungen mit Materialalterung kommen. Auch diese unerwünschten Effekte können durch den Einsatz einer vorzugsweise optionalen, bedarfsweise anbringbaren Entgasungseinheit abgeschwächt oder vermieden werden.

In weiterer vorteilhafter Ausgestaltung ist die Entgasungseinheit nicht direkt an der DWEKE angebracht, sondern ist in einer Entnahmeleitung, die von einer der beiden Verbindungsleitungen abzweigt, untergebracht und umfasst eine Drossel. Im normalen Betriebsfall wird permanent ein kleiner Massenstrom entnommen, der von ca. 156 bar auf 1 bar in der Drossel entspannt wird und dann einem geeigneten Tank und im Weiteren der Kühlmittelreinigung zugeführt wird. Zweckmäßigerweise ist die Drossel als eine Düse mit sehr kleinem Durchmesser ausgestaltet.

Vorteilhafterweise ist eine der an die DWEKE angeschlossenen Verbindungsleitungen einem Druck-Weg-Umformer in einem Steuerventil und die andere Verbindungsleitung einem Vorsteuerventil, insbesondere einem Vorsteuerventil mit einem Auffüllkegel, in eben diesem Steuerventil zugeordnet. Da insbesondere Stoßwellen durch ein Öffnen und Schließen eines Auffüllkegels im Vorsteuerventil ausgelöst werden, die sich infolge der bestehenden Strömungsverbindung auf den Druck-Weg-Umformer übertragen können und hierdurch die Funktionstüchtigkeit des Steuerventils beeinflussen können, bietet sich eine Druckwellenentkopplung insbesondere dieser beiden Baugruppen eines Steuerventils voneinander an.

Um das Sicherheitsventil geeignet mit dem Steuerventil zu verbinden, weist das das Steuerventil des Druckhaltersystems in weiterer vorteilhafter Ausgestaltung einen weiteren Anschluss auf, der mit einem Steuerraum eines Sicherheitsventils verbunden ist.

Wünschenswerterweise ist das Druckhaltersystem modular aufgebaut, so dass auch einzelne Komponenten ausgetauscht werden können, ohne einen Eingriff in nicht austauschwerte Komponenten vornehmen zu müssen. Hierzu ist es vorteilhaft, wenn die DWEKE und die Verbindungsleitungen aus miteinander verschweißten Rohrteilen zusammengesetzt sind, so dass einzelnen Komponenten voneinander getrennt werden können und ggf. ersetzt werden können.

Ebenfalls denkbar ist es, in einer alternativen Ausgestaltung eine möglichst homogene Ausgestaltung des Materials der DWEKE vorzusehen. Insbesondere Verbindungen zwischen einzelnen Bauteilen bedürfen einer besonderen Genauigkeit bei der Konstruktion, um z.B. Haarrisse zu vermeiden, und können mögliche Schwachstellen darstellen, die einen erhöhten Verschleiß bewirken. Daher kann es ebenfalls vorteilhaft sein, die DWEKE aus einem massiven Werkstoffblock geeignet, wie evtl. durch Fräsen oder Bohren, herzustellen.

Ein Ausführungsbeispiel der Erfindung wird nachfolgend anhand einer Zeichnung erläutert. Darin zeigt:

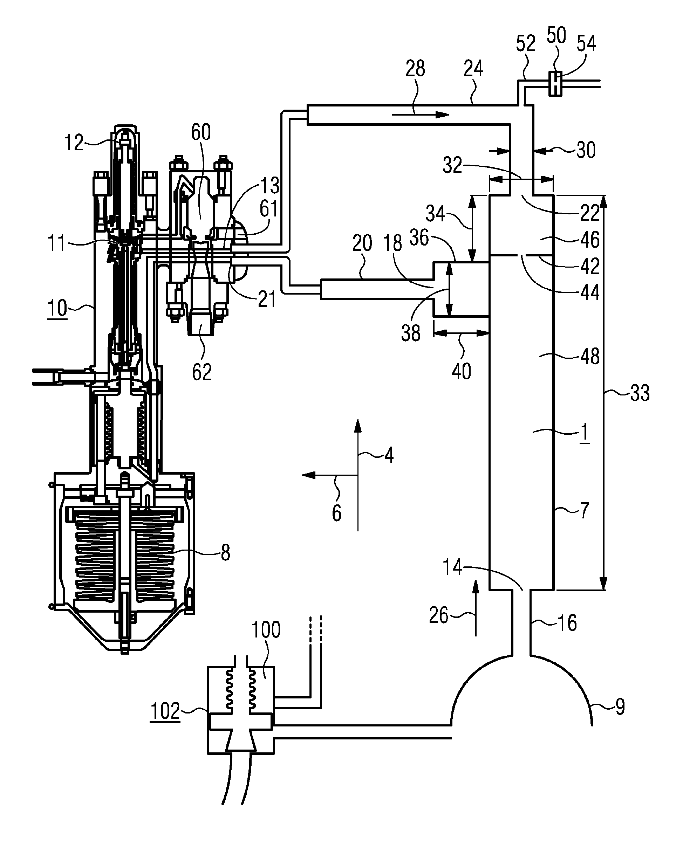

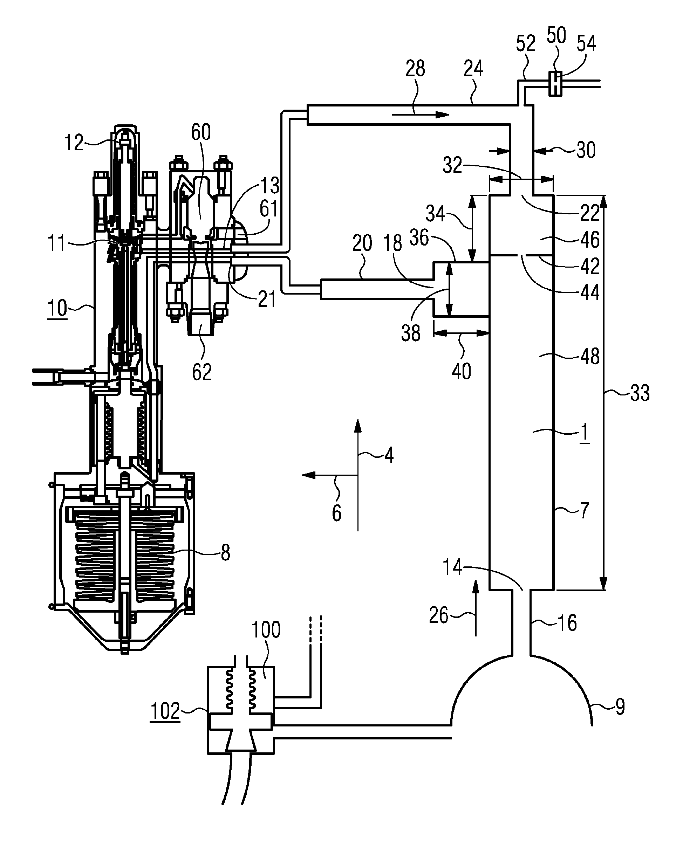

- FIG. 1: ein Steuerventil und eine Druckwellenentkopplungseinheit, die über Verbindungsleitungen miteinander verbunden sind und einem Druckhaltersystem zugehörig sind.

FIG. 1 zeigt eine Druckwellenentkopplungseinheit 1 (kurz: DWEKE), deren Haupterstreckungsrichtung, welche auch als Axialrichtung bezeichnet wird, in Richtung des Pfeils 4 gewählt ist. Auf Grund der im Wesentlichen zylinderförmigen Geometrie der DWEKE 1 kann als zweite Koordinate die Radialrichtung entlang des Pfeils 6 gewählt werden, um die die Geometrie der DWEKE 1 zu charakterisieren. Aufgrund der Materialwahl der Umfassungswand 7 der DWEKE 1 ist diese sowohl druckdicht als auch in Bezug auf den durchströmbaren Innenraum volumenkonstant.

Die DWEKE 1 ist über Öffnungen in der Umfassungswand 7 und mit diesen verbundenen Leitungen sowohl an einen hier nur ausschnittsweise dargestellten Druckhalter 9, einen Druck-Weg-Umformer 8 eines Steuerventils 10 und einen Auffüllkegel 11 als Teil eines Vorsteuerventils 12 des Steuerventils 10 verbunden. Im Einzelnen sind dies eine Einlassöffnung 14, die über eine Versorgungsleitung 16 mit dem Druckhalter 9 verbunden ist, eine Auslassöffnung 18, die über eine Verbindungsleitung 20 mit dem Druck-Weg-Umformer 8 bzw. einem diesem zugeordneten Anschluss 21 verbunden ist, und eine weitere Auslassöffnung 22, die über eine weitere Verbindungsleitung mit dem Auffüllkegel 11 bzw. einem diesem zugeordneten Anschluss 13 verbunden ist.

Die normale Flussrichtung des Fluides - Flüssigkeit, Gas oder Dampf oder eine Mischung daraus - ist entlang des Pfeils 26 und somit vom Druckhalter 9 her kommend. Bei Überschreiten eines kritischen Drucks öffnet sich durch das Zusammenspiel von Druck-Weg-Umformer 8 und Vorsteuerventil 12 der Rückschlagkegel 60 im Steuerventil 10 und gibt den Anschluss 61 der Steuerleitung des Sicherheitsventils 102 zur Ausblaseleitung 62 frei. Das Sicherheitsventil 102 öffnet, so dass Druck im druckführenden System, etwa im Primärkreislauf eines Kernkraftwerkes, abgebaut werden kann. Bei Unterschreiten eines vorgegebenen Druckwerts schließt sich bedingt durch das Wechselspiel der einzelnen Komponenten im Steuerventil 10 das Sicherheitsventil 102, so dass der gewünschte Betriebsdruck gehalten wird.

Insbesondere durch Bewegungen des Auffüllkegels 11 entstehen Druckstöße entlang der Richtung des Pfeils 28 bzw. entgegengesetzt zu dieser im Falle von lokalen Unterdrücken. Diese Druckstöße pflanzen sich über die Verbindungsleitung 24 fort und gelangen zur DWEKE 1. Auf Grund des gegenüber dem Durchmesser 30 der Verbindungsleitung 24 vergrößerten Durchmessers 32 des durchströmbaren Innenraums der DWEKE 1 findet nun ein erster Druckabbau statt, so dass die Druckwelle einen Teil ihrer Wirkung verliert. Auch ist der Abstand der beiden Stirnseiten, also die Höhe 33 des Basiszylinders, der im Wesentlichen zylinderförmig ausgestalteten DWEKE 1 und damit auch die Entfernung zwischen der Einlassöffnung 14 und der gegenüber liegenden Auslassöffnung 22 möglichst groß, was eine möglichst geringe Übertragung der Druckwellen in den Druckhalter 9 bewirkt. Da die Höhe 33 des Basiszylinders größer ist als sein Durchmesser 32, werden die von der Auslassöffnung 22 eingeleiteten Druckwellen bevorzugt in Richtung der Einlassöffnung 14 geleitet, wobei sie mehrfach an den Wänden der DWEKE 1 reflektiert und dabei auch teilweise absorbiert werden und somit abgeschwächt werden.

Da der axiale Abstand 34 des radial von der Mantelfläche des Basiszylinders nach außen abstehenden Stutzens 36, der zu der Verbindungsleitung 20 führt, ebenfalls größer ist als der Durchmesser 32 des Basiszylinders der DWEKE 1, findet das Medium ausreichend Zeit, sich an die Druckwelle anzupassen und diese auslaufen zu lassen. Bei Fehlen der DWEKE 1 würden sich die Druckstöße nahezu ungebremst bis in den Druck-Weg-Umformer 8 bewegen und könnten dort zu unkontrollierten Bewegungen oder Schäden an diesem führen.

Auf Grund der überwiegend vorwärts gerichteten Bewegung der Druckwelle wird auch ein Teil der Druckwelle entgegen der Pfeilrichtung 4 an dem Stutzen 36 vorbei geleitet, so dass auch durch diese Bauform ein Eindringen der Druckwelle in die Verbindungsleitung 20 gemindert wird. Der Durchmesser 38 des Stutzens 36 ist aus den genannten Gründen ebenfalls geringer als dessen radialer Überstand 40 gegenüber der Mantelfläche des Basiszylinders. Auch sind der Durchmesser 32 des Basiszylinders der DWEKE und der Durchmesser 38 des Stutzens 36 im Wesentlichen gleich, so dass keine erneute Kompression des Mediums erfolgt. Weiterhin ist der Durchmesser der Verbindungsleitung 20 signifikant geringer als der Durchmesser 38 des Stutzens 36. Die Aufweitung an der Anschlussstelle zur DWEKE 1 erfolgt ähnlich bei der Verbindungsleitung 24 abrupt bzw. sprungartig. Bei Weglassen des optionalen und vorteilhaften Stutzens 36 befindet sich die Auslassöffnung 18 unmittelbar an der Umfassungswand 7 der DWEKE 1. Der Durchmesser der Verbindungsleitung 20 sollte in diesem Fall signifikant geringer sein als der Durchmesser 32 der DWEKE 1.

Eine ringförmig ausgestaltete Blende 42 mit einer im Vergleich zu dem Durchmesser 32 des Basiszylinders der DWEKE 1 deutlich kleineren Blendenöffnung 44 sorgt für eine zusätzliche Dämpfung von Druckwellen und somit für eine diesbezügliche Entkopplung der von der Blende 42 separierten Raumbereiche. Eine Absorption und/oder Reflektion der Druckwellen findet an der Blende 42 in einem Teilvolumen 46 statt, bevor diese dann dosiert durch die Öffnung 44 in das andere Teilvolumen 48 der DWEKE 1 gelangen, so dass die Druckwellen noch abgeschwächter zum Druck-Weg-Umformer 8 gelangen.

Zusätzlich ist eine Entgasungseinheit 50, die über eine Entnahmeleitung 52 mit der Verbindungsleitung 24 verbunden ist und eine Drossel 54 aufweist, vorgesehen und sorgt dafür, dass ein dampfförmiger Zustand in diesem Teil des Druckhaltersystems vorherrscht, wodurch eine Weitergabe von Druckwellen ebenfalls abgeschwächt wird. Durch die Entgasungseinheit 50 wird ein kleiner Massenstrom entnommen, der von ca. 156 bar auf 1 bar in der Drossel 54 entspannt wird und dann einem geeigneten Tank, wie einem Abblasebehälter oder einem Drainagesammeltank, und im Weiteren der Kühlmittelreinigung zugeführt wird.

Bei - abweichend von der in FIG. 1 dargestellten Anordnung - horizontaler Anordnung der Axialrichtung der DWEKE 1 und vertikaler Anordnung der Radialrichtung der DWEKE 1 sowie nach unten gerichteter Leitung 20 kann sich Kondensat in Leitung 20 und je nach Anordnung auch in Leitung 28 ausbilden. Die DWEKE 1 kann sich daher bis zur Einlassöffnung mit Kondensat füllen, wobei überschüssiges Kondensat in den Druckhalter 9 und die Leitung 16 zurücklaufen kann. Die sich in einem oberen Teilbereich der DWEKE 1 möglicherweise ausbildende Dampfatmosphäre bzw. Gasansammlung kann dann durch die Entgasungseinheit 50 abgeleitet werden.

Zur Erreichung der beschriebenen Ziele haben sich folgende Größenverhältnisse als besonders vorteilhaft erwiesen:
Das Verhältnis von Durchmesser 30 zu Durchmesser 32 liegt bevorzugt im Intervall 0,4 bis 0,7.
Das Verhältnis von Durchmesser 32 zur Länge 34 liegt bevorzugt im Intervall 0,7 bis 1,2.
Das Verhältnis von Durchmesser 32 zur Länge 40 liegt bevorzugt im Intervall 0,8 bis 1,2.
Das Verhältnis von Durchmesser 38 zur Länge 40 liegt bevorzugt im Intervall 0,8 bis 1,2.
Das Verhältnis des Durchmessers von Leitung 20 zum Durchmesser 38 liegt bevorzugt im Intervall 0,2 bis 0,7.
Das Verhältnis des Durchmessers der Blende 44 zum Durchmesser 32 liegt bevorzugt im Intervall 0,1 bis 0,5.
Das Verhältnis des Durchmessers der Blende 44 zum Durchmesser 30 liegt bevorzugt im Intervall 0,5 bis 1,0.
Das Verhältnis von Durchmesser 32 zur Länge 33 liegt bevorzugt im Intervall 0,1 bis 0,4.

Zusammengefasst kann durch den Einbau einer DWEKE 1 eine Weitergabe von Druckwellen vermieden werden bzw. können diese abgeschwächt werden, ohne bestehende und bewährte Druckhalterformen zu verändern oder eine zweite Leitung am Druckhalter anschließen zu müssen. Vor allem durch die infolge der Querschnittsaufweitung herbeigeführte Vergrößerung des Volumens ist ein ausreichender Schutz einzelner Baugruppen eines Druckhaltersystems gewährleistet, so dass einerseits der Verschleiß dieser Komponenten geringer ist und andererseits die Komponenten möglichst fehlerfrei arbeiten können.

**Bezugszeichenliste**

| | |
|---|---|
| 1 | DWEKE |
| 4 | Pfeil in Axialrichtung |
| 6 | Pfeil in Radialrichtung |
| 7 | Umfassungswand |
| 8 | Druck-Weg-Umformer |
| 9 | Druckhalter |
| 10 | Steuerventil |
| 11 | Auffüllkegel |
| 12 | Vorsteuerventil |
| 13 | Anschluss |
| 14 | Einlassöffnung |
| 16 | Versorgungsleitung |
| 18 | Auslassöffnung |
| 20 | Verbindungsleitung |
| 21 | Anschluss |
| 22 | Auslassöffnung |
| 24 | Verbindungsleitung |
| 26 | Pfeil in Richtung des Flusses vom Druckhalter |
| 28 | Pfeil in Richtung der Druckwellen vom Auffüllkegel |
| 30 | Durchmesser der Verbindungsleitung |
| 32 | Durchmesser der DWEKE |
| 33 | Höhe des Basiszylinders |
| 34 | Entfernung zwischen Auslassöffnung und Stutzen |
| 36 | Stutzen |
| 38 | Durchmesser des Stutzens |
| 40 | radialer Überstand des Stutzens |
| 42 | Blende |
| 44 | Blendenöffnung |
| 46 | Teilvolumen der DWEKE |
| 48 | Teilvolumen der DWEKE |
| 50 | Entgasungseinheit |
| 52 | Entnahmeleitung |
| 54 | Drossel |
| 60 | Rückschlagkegel |
| 61 | Anschluss zu dem Steuerraum des Sicherheitsventils |
| 62 | Anschluss zur Ausblaseleitung |
| 100 | Steuerraum |
| 102 | Sicherheitsventil |

## Patentansprüche

1. Druckhaltersystem, insbesondere für ein Kernkraftwerk, mit einem Druckhalter (9) und mit einem mindestens zwei Anschlüsse (13, 21) aufweisenden Steuerventil (10), wobei die beiden Anschlüsse (13, 21) strömungsmäßig mit dem Druckhalter (9) verbunden sind
**dadurch gekennzeichnet, dass**
zwischen dem Druckhalter (9) und dem Steuerventil (10) eine Druckwellentkopplungseinheit (1) mit einem innerhalb einer druckdichten und volumenkonstanten Umschließung befindlichen Innenraum angeordnet ist, wobei die Umschließung zusätzlich zu einer Einlassöffnung (14), die über eine Versorgungsleitung (16) mit dem Druckhalter (9) verbunden ist, zwei Auslassöffnungen (18, 22) aufweist, die jeweils über eine Verbindungsleitung (20, 24) mit einem zugehörigen Anschluss (13, 21) des Steuerventils (10) verbunden sind, und wobei die Druckwellentkopplungseinheit (1) gegenüber den Verbindungsleitungen (20, 24) einen signifikant erhöhten Innendurchmesser (32, 38) aufweist.

2. Druckhaltersystem nach Anspruch 1, **dadurch gekennzeichnet, dass** die Einlassöffnung (14) und eine der beiden Auslassöffnungen (18, 22) an gegenüberliegenden Enden der Druckwellentkopplungseinheit (1) angeordnet sind.

3. Druckhaltersystem nach Anspruch 1 oder 2, **dadurch gekennzeichnet, dass** der Innenraum der Druckwellenentkopplungseinheit (1) eine zylindrische Basisform besitzt, wobei die Höhe (33) des Basiszylinders größer ist als sein Durchmesser (32).

4. Druckhaltersystem nach Anspruch 3, **dadurch gekennzeichnet, dass** die Einlassöffnung (14) und eine der beiden Auslassöffnungen (18, 22) einander gegenüberliegend an den Stirnseiten des Basiszylinders angeordnet sind, und dass die andere Auslassöffnung (18, 22) am Ende eines radial von der Mantelfläche des Basiszylinders abstehenden Stutzens (36) angeordnet ist.

5. Druckhaltersystem nach Anspruch 4, **dadurch gekennzeichnet, dass** der Innendurchmesser (38) des Stutzens (36) im Wesentlichen so groß ist wie der Durchmesser (32) des Basiszylinders.

6. Druckhaltersystem nach Anspruch 4 oder 5, **dadurch gekennzeichnet, dass** der radiale Überstand (40) des Stutzens (36) gegenüber der Mantelfläche des Basiszylinders gleich oder größer ist als der Innendurchmesser (38) des Stutzens (36).

7. Druckhaltersystem nach einem der Ansprüche 4 bis 6, **dadurch gekennzeichnet, dass** der axiale Abstand (34) des Stutzens (36) von der mit der Auslassöffnung (18, 22) versehenen Stirnseite des Basiszylinders gleich oder größer ist als Durchmesser (32) des Basiszylinders.

8. Druckhaltersystem nach einem der Ansprüche 3 bis 7, **dadurch gekennzeichnet, dass** zwischen beiden Auslassöffnungen (18, 22) eine Blende (42) im Innenraum der Druckwellenentkopplungseinheit (1) angeordnet ist.

9. Druckhaltersystem nach Anspruch 8, **dadurch gekennzeichnet, dass** die Blende (42) als eine im Basiszylinder angeordnete Ringblende ausgebildet ist, wobei der Durchmesser der Blendenöffnung (44) wesentlich kleiner ist als der Durchmesser (32) des Basiszylinders.

10. Druckhaltersystem nach einem der Ansprüche 1 bis 9, **dadurch gekennzeichnet, dass** eine Entgasungseinheit (50) an der Druckwellentkopplungseinheit angebracht ist.

11. Druckhaltersystem nach Anspruch 10, **dadurch gekennzeichnet, dass** die Entgasungseinheit (50) eine von einer der beiden Verbindungsleitungen (20, 24) abzweigende Entnahmeleitung (52) und eine in die Entnahmeleitung (52) geschaltete Drossel (54) aufweist.

12. Druckhaltersystem nach einem der Ansprüche 1 bis 11, **dadurch gekennzeichnet, dass** der eine Anschluss (21) einem Druck-Weg-Umformer (8) des Steuerventils (10) und der andere Anschluss (13) einem Vorsteuerventil (12) des Steuerventils (10) zugeordnet ist.

13. Druckhaltersystem nach einem der Ansprüche 1 bis 12, **dadurch gekennzeichnet, dass** das Steuerventil (10) einen weiteren Anschluss (61) aufweist, der mit einem Steuerraum (100) eines Sicherheitsventils (102) verbunden ist.

14. Druckhaltersystem nach einem der Ansprüche 1 bis 13, wobei die Druckwellenentkopplungseinheit (1) aus miteinander verschweißten Rohrstücken zusammengesetzt ist.

15. Druckhaltersystem nach einem der Ansprüche 1 bis 13, wobei die Druckwellenentkopplungseinheit (1) aus einem massiven Werkstoffblock hergestellt ist, insbesondere durch Fräsen oder Bohren.
